# DEMANDE DE BREVET EUROPEEN

(11) **EP 1 070 866 A1**
(43) Date de publication de la demande: **24.01.2001**
(21) Numéro de dépôt: 00402002.0
(22) Date de dépôt: 12.07.2000
(51) Int. Cl.: F16C 33/41

(54) **Dispositif de cage pour roulement à billes et roulement associé**

(30) Priorité: 23.07.1999 FR 9909613
(71) Demandeur: SKF FRANCE, F-92140 Clamart (FR)
(72) Inventeur: Fierling, Yannick, 57410 Petit-Rederching (FR)
(74) Mandataire: Casalonga, Axel

(57) **Abrégé**

Dispositif de cage annulaire destiné au maintien de l'espacement circonférentiel des éléments roulants, notamment des billes (6), dans un roulement (1) comprenant au moins une rangée de billes disposées entre deux chemins de roulement, ladite cage présentant une face arrière (11) et une face frontale (12) axialement décalées et présentant une multiplicité d'alvéoles (13) sensiblement sphériques dans chacune desquelles est disposée une bille, lesdites alvéoles débouchant axialement sur ladite face frontale et radialement des deux côtés, ladite face frontale présentant une multiplicité de paires de languettes opposées pour le maintien desdites billes dans lesdites alvéoles. Ladite face frontale (12) comprend deux surfaces (14, 15) axialement décalées l'une par rapport à l'autre, dont une première surface extérieure (15) d'où sont issues, en saillie axiale, lesdites languettes (16, 17) et qui est située dans un plan en avant du plan radial passant par les centres desdites alvéoles (13) et une seconde surface intérieure (15) qui est située dans un plan passant sensiblement par les centres desdites alvéoles (13).

## Description

La présente invention concerne le domaine des cages utilisées dans les roulements pour maintenir un espacement circonférentiel régulier entre leurs éléments roulants.

On utilise depuis de nombreuses années des cages en matière synthétique telles que des polyamides 6.6, éventuellement chargées de fibres de verre afin d 'augmenter leurs caractéristiques mécaniques, qui présentent de nombreux avantages parmi lesquels leur facilité de réalisation par moulage par injection, leur facilité de mise en place par encliquetage, leur silence de fonctionnement et leur légèreté.

De telles cages en matière synthétique sont naturellement destinées à des applications dans lesquelles les roulements peuvent être amenés à tourner à des vitesses extrêmement élevées. Par exemple, pour des roulements de petites dimensions, de diamètre extérieur voisin de dix millimètres, ces vitesses peuvent être de l'ordre de cent mille tours par minute.

L'évolution des techniques actuelles tend à augmenter encore les vitesses de rotation auxquelles sont soumis les roulements en fonctionnement continu, de telle sorte qu'apparaissent des problèmes que les cages actuellement connues ne permettent pas de résoudre.

Plus particulièrement, les cages utilisées à l'heure actuelle se présentent généralement sous la forme d'un anneau délimité radialement par deux surfaces sensiblement cylindriques, concentriques à leur axe de rotation, et axialement par une surface frontale et une surface arrière perpendiculaires à l'axe de rotation de la cage.

Cet anneau présente des alvéoles sphériques débouchant radialement à l'extérieur et à l'intérieur et axialement dans une direction au travers de ladite surface frontale. Chaque alvéole se prolonge par une paire de languettes disposées face à face et définissant entre elles une ouverture à travers de laquelle une bille peut être introduite axialement dans l'alvéole par encliquetage. Les languettes des alvéoles enveloppent par leurs surfaces internes les billes, axialement et radialement dans les deux sens, afin d'assurer en même temps la retenue de la cage sur la rangée de billes et l'écartement entre les billes.

On a pu constater qu'à des vitesses élevées de rotation, une cage conventionnelle en polyamide est fortement déformée du fait de la force centrifuge, ce qui engendre en particulier les problèmes suivants.

Les alvéoles subissent des déformations importantes, ce qui engendre une augmentation des jeux entre les billes et les alvéoles dans la partie extérieure de ces dernières et, au contraire, une tendance à un resserrement des alvéoles sur les parties intérieures des billes.

Les billes entrent en contact avec les languettes principalement dans leurs zones situées vers l'alésage de la cage, engendrant des frottements et des pressions de contact élevés entre la cage et les billes.

Ces frottements et ces pressions de contact élevés augmentent la dissipation d'énergie, élèvent la température, détruisent le film de lubrifiant, augmentent l'usure et favorisent le détachement de microparticules de la cage.

Il peut arriver en outre que la déformation radiale de la cage provoque des contacts entre cette cage et la bague extérieure de roulement.

On a pu également remarquer qu'à des vitesses élevées de fonctionnement, il se produit des phénomènes d'instabilité dans le comportement de la cage avec notamment l'apparition de phénomènes vibratoires qui sont dus au fait que le centre de gravité de la cage est en général axialement décalé par rapport au plan radial défini par les centres des billes.

Les phénomènes qui viennent d'être mentionnés conduisent, à très hautes vitesses, à une destruction rapide des cages conventionnelles et en conséquence des roulements.

La présente invention a pour but de proposer un dispositif de cage permettant de remédier, pour le moins en partie, aux inconvénients des cages conventionnelles afin d'assurer un fonctionnement amélioré des roulements notamment à billes équipés de telles cages et d'augmenter leur durée de vie, notamment lorsque ces roulements sont appelés à fonctionner à très grande vitesse de rotation.

Le dispositif de cage annulaire selon l'invention, destiné au maintien de l'espacement circonférentiel des éléments roulants, notamment des billes, dans un roulement, comprend au moins une rangée de billes disposées entre deux chemins de roulement, ladite cage présentant une face arrière et une face frontale axialement décalées et présentant une multiplicité d'alvéoles sensiblement sphériques dans chacune desquelles est disposée une bille, lesdites alvéoles débouchant axialement sur ladite face frontale et radialement des deux côtés, ladite face frontale présentant une multiplicité de paires de languettes opposées pour le maintien desdites billes dans lesdites alvéoles.

Selon l'invention, ladite face frontale comprend deux surfaces axialement décalées l'une par rapport à l'autre, dont une première surface d'où sont issues, en saillie axiale, lesdites languettes et qui est située dans un plan en avant du plan radial passant par les centres desdites alvéoles et une seconde surface qui est située dans un plan passant sensiblement par les centres desdites alvéoles.

Selon l'invention, ladite première surface est située radialement à l'extérieur de ladite seconde surface.

Selon l'invention, lesdites languettes sont de préférence disposées de telle sorte que le contact entre elles et les billes s'établit dans une zone située à l'extérieur d'une surface cylindrique virtuelle de même axe que ladite cage et passant par les centres desdites alvéoles.

Selon l'invention, lesdites languettes sont de préférence disposées de telle sorte que leurs extrémités libres sont situées à l'extérieur d'une surface cylindrique virtuelle de même axe que ladite cage et passant par les centres desdites alvéoles.

Selon l'invention, le rapport entre l'épaisseur radiale desdites languettes et l'épaisseur radiale totale de ladite cage est de préférence compris entre 0,45 et 0,6.

Selon l'invention, le rapport entre la longueur axiale desdites languettes et l'épaisseur de ladite cage depuis sa face arrière jusqu'à l'extrémité desdites languettes est de préférence compris entre 0,07 et 0,33.

Selon l'invention, le diamètre primitif passant par les centres desdites alvéoles est de préférence inférieur ou égal au diamètre primitif du roulement passant par les centres des billes.

Selon l'invention, le décalage radial entre le diamètre primitif passant par les centres desdites alvéoles et le diamètre primitif du roulement passant par les centres des billes est de préférence compris entre zéro et un quart du diamètre des billes.

Selon l'invention, ladite face arrière de la cage comprend de préférence au moins un évidement annulaire.

Selon l'invention, les fonds des alvéoles sont de préférence pourvus de passages traversants.

Selon l'invention, ladite face arrière de la cage comprend de préférence une nervure annulaire extérieure et une nervure intérieure annulaire, séparées par un évidement annulaire.

Selon l'invention, le fond dudit évidement comprend de préférence des parties convexes dans les zones des alvéoles et des parties plates entre ces parties concaves.

Selon l'invention, ladite surface radiale extérieure et ladite surface radiale intérieure se rejoignent de préférence par un arrondi concave.

Selon l'invention, l'épaisseur axiale desdites nervures est de préférence réduite dans la zone située entre et à distance desdites alvéoles.

Selon l'invention, le rapport entre le décalage axial entre lesdites surfaces axiales extérieure et intérieure et le diamètre des billes est de préférence compris entre 0,05 et 0,33.

La présente invention a également pour objet un roulement à billes comprenant un dispositif de cage tel qu'il vient d'être présenté.

La présente invention sera mieux comprise à l'étude de dispositifs de cages pour roulements à billes, décrits à titre d'exemples non limitatifs et illustrés par le dessin sur lequel :
- la figure 1 représente, en coupe longitudinale, un roulement à billes équipé d'une cage selon l'invention ;
- la figure 2 représente, dans une vue de l'avant en perspective, une portion circonférentielle d'une cage selon l'invention ;
- la figure 3 représente, dans une vue de l'arrière en perspective, une portion circonférentielle de la cage de la figure 2 ;
- la figure 4 représente une vue frontale d'une portion circonférentielle de la cage de la figure 2 ;
- la figure 5 représente une coupe longitudinale d'une portion circonférentielle la cage de la figure 2 ;
- la figure 6 représente une coupe radiale d'une portion circonférentielle la cage de la figure 2 ;
- et la figure 7 représente, dans une vue de l'avant en perspective, une portion circonférentielle d'une variante d'exécution de la cage précitée.

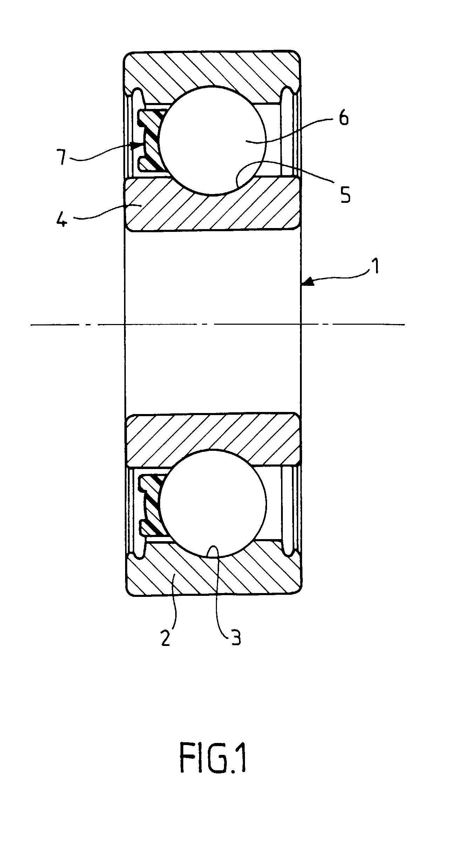

En se reportant à la figure 1, on voit qu'on a représenté un roulement à billes 1 qui comprend une bague extérieure 2 pourvue dans son alésage d'un chemin de roulement torique 3, une bague intérieure 4 pourvue dans sa surface extérieure d'un chemin de roulement torique 5, et une rangée de billes 6 disposées entre le chemin de roulement 3 de la bague extérieure 2 et le chemin de roulement 5 de la bague intérieure 4.

La rangée de billes 6 est maintenue par une cage annulaire 7 réalisée en un matériau synthétique, qui permet de maintenir un espacement circonférentiel régulier entre les billes 6.

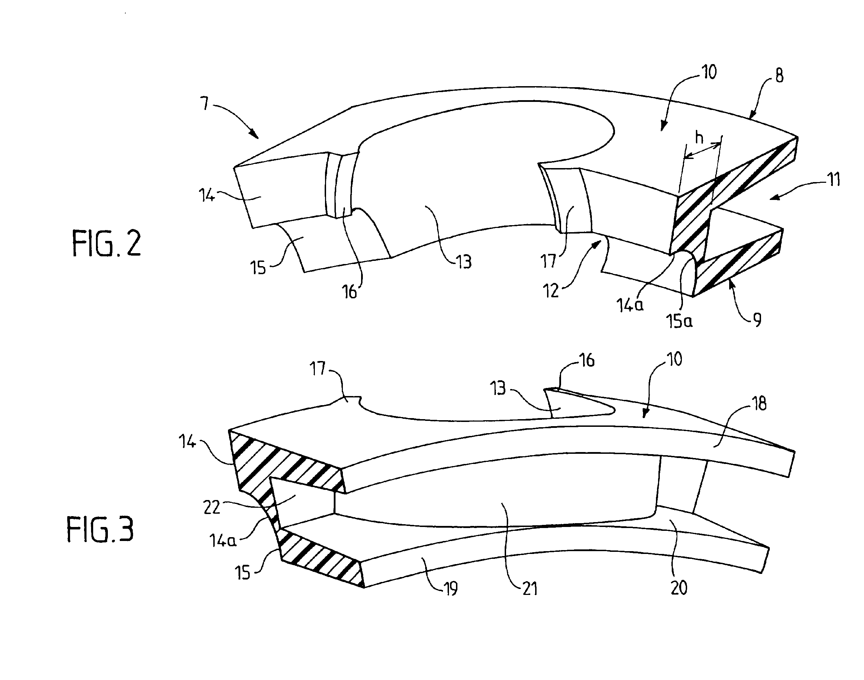

En se reportant notamment aux figures 2 et 3, on voit que la cage 7 se présente sous la forme d'un anneau 8 qui présente une face intérieure cylindrique 9 située à distance de la surface extérieure de la bague intérieure 4 du roulement 1, une face extérieure cylindrique 10 située à distance de la surface intérieure de la bague extérieure 2 du roulement 1, ainsi qu'une face arrière 11 et une face avant ou frontale 12 axialement espacées.

L'anneau 8 constituant la cage 7 présente une multiplicité d'alvéoles sphériques 13 régulièrement réparties dans son sens circonférentiel et dans chacune desquelles est disposée une bille 6.

Chaque alvéole débouche axialement sur la face frontale 12 et radialement des deux côtés sur la face intérieure 9 et sur la face intérieure 10.

La face frontale 12 de l'anneau 8 présente une première surface radiale 14, extérieure, qui est décalée vers l'avant par rapport à une seconde surface radiale 15, intérieure, le plan radial qui contient cette seconde surface 15 passant sensiblement par les centres Ca des alvéoles 13. Ainsi, l'anneau 8 présente un épaulement annulaire en saillie axiale par rapport à la surface 15 et allant jusqu'à la surface 14.

Comme on le voit sur la figure 2, le rapport entre le décalage axial h entre les surfaces axiales extérieure et intérieure 14, 15 et le diamètre Db des billes 6 est compris de préférence entre 0,05 et 0,33.

A partir de la surface radiale avancée 14, l'anneau 8 présente une multiplicité de paires de languettes opposées 16 et 17 qui sont respectivement disposées de part et d'autre des alvéoles 13 et qui s'étendent vers l'avant, ces languettes 16 et 17 présentant un flanc extérieur prolongeant la face extérieure cylindrique 10 et un flanc intérieur prolongeant le flanc annulaire 14a qui rejoint la surface 14 et la surface 15.

La surface extérieure 14 et les languettes 16 et 17 sont situés à l'extérieur d'un cylindre virtuel coaxial à l'anneau 8 et passant par les centres Ca des alvéoles 13.

Le flanc annulaire 14a de la surface extérieure 14 situé du côté intérieur rejoint la surface intérieure 15 par un arrondi concave 15a.

Ainsi, les alvéoles 13 présentent, en arrière du plan radial passant par leurs centres Ca, une surface sphérique s'étendant sur l'épaisseur radiale de l'anneau 8 comprise entre la surface intérieure 9 et la surface extérieure 10 et, en avant de ce plan, deux portions opposées de surfaces sphériques formées en arrière du plan passant par la surface avancée 14 et se prolongeant jusqu'aux extrémités des languettes 16 et 17.

D'une extrémité des languettes 16 et 17 à l'extrémité de l'autre languette, à l'extérieur dudit cylindre virtuel, les alvéoles 13 enveloppent en partie la partie supérieure des billes 6, en particulier environ ses trois quarts, tandis qu'à l'intérieur de ce cylindre virtuel, dans la zone de la surface radiale intérieure 15, les alvéoles 13 enveloppent sensiblement la moité des billes.

Lorsque l'on regarde l'anneau 8 constituant la cage 7 par sa face arrière 11, on voit que cette dernière présente une nervure extérieure annulaire 18 et une nervure intérieure annulaire 19 qui sont séparées par un évidement annulaire 20 dont le fond présente des parties convexes 21 dans les zones des alvéoles 13, épousant sensiblement la forme sphérique de ces alvéoles, et, entre ces parties convexes 21, des surfaces 22 qui s'étendent dans un plan radial légèrement décalé vers l'arrière par rapport au plan radial contenant la surface radiale intérieure 15 de la face frontale 12.

En se reportant à la figure 5 on voit que le rapport entre l'épaisseur radiale El desdites languettes 16 et 17 et l'épaisseur radiale totale Et de la cage annulaire 8 peut être compris entre 0,45 et 0,6.

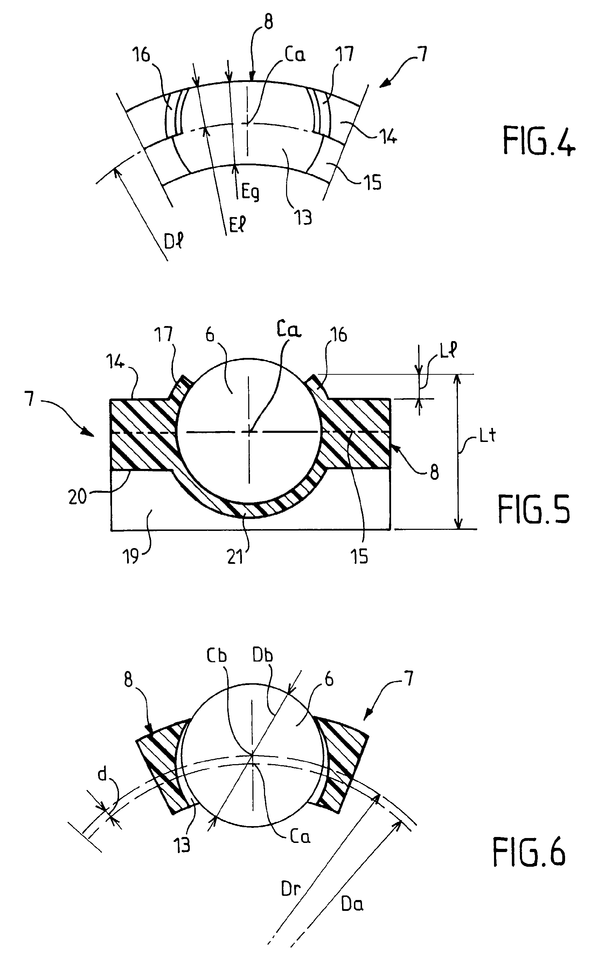

En se reportant à la figure 4, on voit que le rapport entre la longueur axiale Ll des languettes 16 et 17 et l'épaisseur Lt de la cage annulaire 8 depuis sa face arrière jusqu'à l'extrémité desdites languettes, prises axialement, peut être compris entre 0,07 et 0,33.

En se reportant à la figure 5, on voit que le diamètre primitif Da passant par les centres Ca des alvéoles 13 est inférieur ou égal au diamètre primitif Dr du roulement passant par les centres Cb des billes 6. En particulier, le décalage radial d entre le diamètre primitif Da passant par les centres Ca des alvéoles 13 et le diamètre primitif Dr du roulement passant par les centres Cb des billes 6 peut être compris entre zéro et un quart du diamètre Db des billes 6.

Il peut avantageusement résulter des positions relatives précisées ci-dessus que les billes 6 entrent en contact avec les parois des alvéoles 13 sur des zones situées à l'extérieur du cylindre virtuel coaxial au roulement 1 et passant par les centres Ca de ces alvéoles 13.

Pour la mise en place de la cage 7 sur le roulement 1, on présente sa face frontale 12 en regard de l'espace annulaire séparant les bagues 2 et 4. Puis, les billes étant prépositionnées de façon espacé, on appuie axialement sur la cage 7 de façon à faire pénétrer les billes 6 dans les alvéoles 13 par encliquetage, en déformant de façon réversible les languettes 16 et 17 qui reprennent leurs places pour envelopper les billes 6.

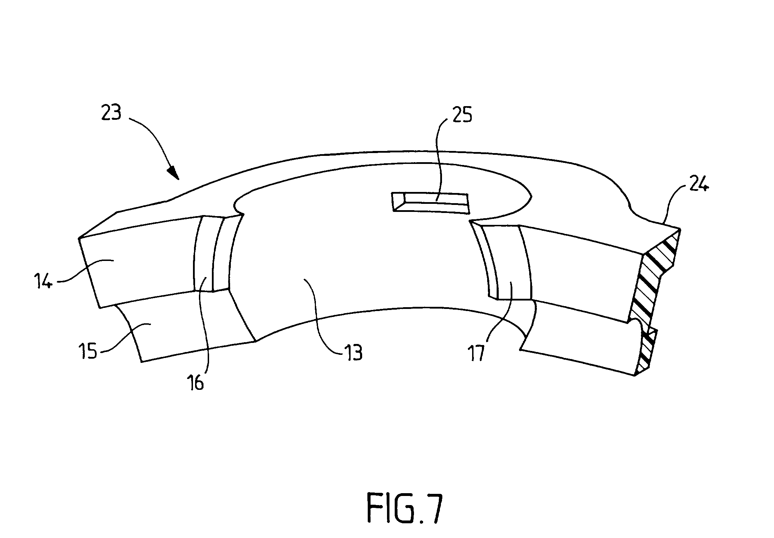

En se reportant à la figure 7, on voit qu'on a représenté une cage 23 constituant une variante d'exécution de la cage 7, qui s'en différencie par le fait que ses nervures arrières 18 et 19 présentent des creux 24 dans leurs zones situées entre et à distance des alvéoles 13, réduisant ainsi l'épaisseur axiale des nervures 18 et 19 à partir de la surface extérieure radiale 14, et que dans les fonds des alvéoles 13 sont ménagés des passages traversants 25 qui permettent une circulation d'un fluide de lubrification du roulement 1.

## Revendications

1. Dispositif de cage annulaire destiné au maintien de l'espacement circonférentiel des éléments roulants, notamment des billes (6), dans un roulement (1) comprenant au moins une rangée de billes disposées entre deux chemins de roulement, ladite cage présentant une face arrière (11) et une face frontale (12) axialement décalées et présentant une multiplicité d'alvéoles (13) sensiblement sphériques dans chacune desquelles est disposée une bille, lesdites alvéoles débouchant axialement sur ladite face frontale et radialement des deux côtés, ladite face frontale présentant une multiplicité de paires de languettes opposées pour le maintien desdites billes dans lesdites alvéoles, caractérisé par le fait que ladite face frontale (12) comprend deux surfaces (14, 15) axialement décalées l'une par rapport à l'autre, dont une première surface (14) d'où sont issues, en saillie axiale, lesdites languettes (16, 17) et qui est située dans un plan en avant du plan radial passant par les centres (Ca) desdites alvéoles (13) et une seconde surface (15) qui est située dans un plan passant sensiblement par les centres (Ca) desdites alvéoles (13).

2. Dispositif de cage selon la revendication 1, caractérisé par le fait que ladite première surface (14) est située radialement à l'extérieur de ladite seconde surface (15).

3. Dispositif de cage selon l'une des revendications 1 et 2, caractérisé par le fait que lesdites languettes (16, 17) sont disposées de telle sorte que le contact entre elles et les billes (6) s'établit dans une zone située à l'extérieur d'une surface cylindrique virtuelle de même axe que ledite cage et passant par les centres (Ca) desdites alvéoles (13).

4. Dispositif de cage selon l'une quelconque des revendications précédentes, caractérisé par le fait que lesdites languettes (16, 17) sont disposées de telle sorte que leurs extrémités libres sont situées à l'extérieur d'une surface cylindrique virtuelle de même axe que ladite cage et passant par les centres (Ca) desdites alvéoles (13).

5. Dispositif de cage selon l'une quelconque des revendications précédentes, caractérisé par le fait que le rapport entre l'épaisseur radiale (El) desdites languettes (16, 17) et l'épaisseur radiale totale (Et) de ladite cage est compris entre 0,45 et 0,6.

6. Dispositif de cage selon l'une quelconque des revendications précédentes, caractérisé par le fait que le rapport entre la longueur axiale (Ll) desdites languettes (16, 17) et la longueur (Lt) de ladite cage depuis sa face arrière jusqu'à l'extrémité desdites languettes est compris entre 0,07 et 0,33.

7. Dispositif de cage selon l'une quelconque des revendications précédentes, caractérisé par le fait que le diamètre primitif (Da) passant par les centres (Ca) desdites alvéoles (16, 17) est inférieur ou égal au diamètre primitif (Dr) du roulement passant par les centres (Cb) des billes (6).

8. Dispositif de cage selon l'une quelconque des revendications précédentes, caractérisé par le fait que le décalage radial (d) entre le diamètre primitif (Da) passant par les centres (Ca) desdites alvéoles (16, 17) et le diamètre primitif (Dr) du roulement passant par les centres (Cb) des billes est compris entre zéro et un quart du diamètre des billes.

9. Dispositif de cage selon l'une quelconque des revendications précédentes, caractérisé par le fait que ladite face arrière (11) de la cage comprend au moins un évidement annulaire.

10. Dispositif de cage selon l'une quelconque des revendications précédentes, caractérisé par le fait que les fonds des alvéoles (13) sont pourvus de passages traversants (25).

11. Dispositif de cage selon l'une quelconque des revendications précédentes, caractérisé par le fait que ladite face arrière (11) de la cage comprend une nervure annulaire extérieure (18) et une nervure intérieure annulaire (19), séparées par un évidement annulaire (20).

12. Dispositif de cage selon la revendication 11, caractérisé par le fait que le fond dudit évidement (20) comprend des parties convexes (21) dans les zones des alvéoles (13) et des parties plates (22) entre ces parties convexes.

13. Dispositif de cage selon l'une quelconque des revendications précédentes, caractérisé par le fait que ladite surface radiale extérieure (14) et ladite surface radiale intérieure (15) se rejoignent par un arrondi concave.

14. Dispositif de cage selon la revendication 11, caractérisé par le fait que l'épaisseur axiale desdites nervures (18, 19) est de préférence réduite dans la zone située entre et à distance desdites alvéoles (13).

15. Dispositif de cage selon l'une quelconque des revendications précédentes, caractérisé par le fait que le rapport entre le décalage axial (h) entre lesdites surfaces axiales extérieure et intérieure (14, 15) et le diamètre des billes (6) est compris entre 0,05 et 0,33.

16. Roulement à billes comprenant un dispositif de cage selon l'une quelconque des revendications précédentes.
